# EUROPÄISCHE PATENTSCHRIFT

(11) **EP 3 008 331 B1**
(45) Veröffentlichungstag und Bekanntmachung des Hinweises auf die Patenterteilung: **21.08.2019**
(21) Anmeldenummer: 14730833.2
(22) Anmeldetag: 11.06.2014
(51) Int. Cl.: F03D 1/06, B64C 11/18, B64C 3/14

(54) **ROTORBLATT EINER WINDENERGIEANLAGE UND WINDENERGIEANLAGE**
ROTOR BLADE OF A WIND TURBINE AND WIND TURBINE
PALE DE ROTOR D'UNE ÉOLIENNE ET ÉOLIENNE

(30) Priorität: 11.06.2013 DE 102013210901
(43) Veröffentlichungstag der Anmeldung: 20.04.2016
(73) Patentinhaber: Wobben Properties GmbH, 26607 Aurich (DE)
(72) Erfinder: ALTMIKUS, Andree, 26605 Aurich (DE)
(74) Vertreter: Eisenführ Speiser
(86) Internationale Anmeldenummer: PCT/EP2014/062100
(87) Internationale Veröffentlichungsnummer: WO 2014/198754

(56) Entgegenhaltungen:
- EP-A2- 2 466 122
- WO-A1-2011/097024
- WO-A1-2013/020959
- WO-A2-2012/122262
- DE-A1-102010 026 588
- US-A1- 2012 051 936

## Beschreibung

Die vorliegende Erfindung betrifft ein Rotorblatt einer Windenergieanlage. Außerdem betrifft die vorliegende Erfindung eine Windenergieanlage.

Windenergieanlagen sind allgemein bekannt und heutzutage haben sich sogenannte Horizontalachsen-Windenergieanlagen durchgesetzt, auf die sich auch die vorliegende Anmeldung bezieht. Moderne Windenergieanlagen sind an die an ihrem Aufstellungsort zu erwartenden Windverhältnisse angepasst. Insbesondere kann grundsätzlich zwischen Windenergieanlagen für Starkwindstandorte und Windenergieanlagen für Schwachwindstandorte unterschieden werden. Ggf können weitere Untergliederungen vorgenommen werden.

Windenergieanlagen für Schwachwindstandorte weisen im Vergleich zu Windenergieanlagen für Standorte mit höheren mittleren Windgeschwindigkeiten längere und zumindest abschnittsweise auch filigranere Rotorblätter auf. Hierdurch können diese längeren Rotorblätter eine größere Rotorfläche überstreichen, um somit auch bei schwachem Wind diesem möglichst viel Energie entnehmen zu können. Starke Belastungen durch starken Wind treten vergleichsweise selten auf.

Für den Bau solcher Rotorblätter ist darauf zu achten, dass dies besonders im mittleren Bereich so schmal sind, dass sie möglichst wenig Gewicht aufweisen, gleichzeitig aber eine ausreichende Tragfähigkeit für das Blatt gewährleisten können. Insbesondere im mittleren Bereich des Rotorblattes, bezogen auf die radiale Richtung des Rotors, kann es Probleme bereiten, die beschriebenen Anforderungen an die Stabilität und Tragfähigkeit des Rotorblattes mit dem erforderlichen aerodynamischen Design in Einklang zu bringen.

Der Spielraum zur Auslegung des aerodynamischen Profils kann dabei mitunter so klein sein, dass zwar ein aerodynamisches Profil mit guten Eigenschaften erzielt wird, dass aber leichte Abweichungen dieses optimalen aerodynamischen Profils für die Strömungseigenschaften signifikant sein können. Insbesondere Verunreinigungen des Rotorblattes können zu einem unerwünscht frühen Strömungsabriss führen, der bei einem verunreinigungsfreien Blatt nicht oder zumindest nicht in dem Maße auftritt. Dabei können mitunter Regentropfen als signifikante Verunreinigung des Blattes ausreichen.

Der vorliegenden Erfindung liegt somit die Aufgabe zugrunde, zumindest eines der oben genannten Probleme zu adressieren. Insbesondere soll eine Lösung zur Verbesserung aerodynamischer Eigenschaften eines Rotorblattes angegeben werden. Insbesondere soll ein Rotorblatt einer Windenergieanlage für Schwachwindstandorte verbessert, insbesondere verschmutzungsunanfälliger gemacht werden. Zumindest soll eine zum Stand der Technik alternative Lösung vorgeschlagen werden.

Das Deutsche Patent- und Markenamt hat in der Prioritätsanmeldung zu vorliegender PCT-Anmeldung folgenden Stand der Technik recherchiert: DE 103 47 802 B3, US 2011/0211966 A1, US 2012/0051936 A1 und EP 2 466 122 A2.

Erfindungsgemäß wird ein Rotorblatt gemäß Anspruch 1 vorgeschlagen. Ein solches Rotorblatt, nämlich das eines aerodynamischen Rotors, umfasst wenigstens einen ersten und einen zweiten Grenzschichtzaun. Die Position dieser Grenzschichtzäune ist speziell auf einen mittleren Bereich, bezogen auf eine radiale Richtung des aerodynamischen Rotors, abgestimmt. Die Position der wenigstens zwei Grenzschichtzäune ist so gewählt, dass diese Grenzschichtzäune einen mittleren Bereich des Rotorblattes einschließen.

Hierbei liegt die Überlegung zugrunde, dass das Rotorblatt im nabennahen Bereich auch bei Schwachwindanlagen, also bei Windenergieanlage für Schwachwindstandorte, breit ausgeführt sein kann und ein weniger anfälliges Profil zulässt. Im äußeren Bereich, also zur Rotorblattspitze hin, kann ebenfalls eine robustere Profilauslegung vorgenommen werden, weil in diesem äußeren Bereich die Tragfähigkeit des Rotorblattes das Blattdesign weniger dominant bestimmt. Im mittleren Bereich spielt dabei die Tragfähigkeit des Rotorblattes in diesem Bereich eine große Rolle und der Einfluss des Windes auf den Ertrag der Windenergieanlage ist auch hier noch recht groß. Außerdem können in dem mittleren Bereich mitunter größere Einflüsse durch Verschmutzungen wie Regen auftreten, weil die Umlaufgeschwindigkeit hier nicht so hoch ist wie im äußeren Bereich des Blattes und somit sich Regenwasser besser an der Oberfläche halten kann.

An dieser Stelle wird darauf hingewiesen, dass die Verwendung von Grenzschichtzäunen bei Rotorblättern von Windenergieanlagen grundsätzlich bekannt ist. In diesem Zusammenhang wird auf das deutsche Patent DE 103 47 802 B3 verwiesen. Dort sind Grenzschichtzäune vorgesehen, um Querströmungen zwischen einem im Wesentlichen zylindrischen Wurzelbereich des Rotorblattes zu dem ein aerodynamisches Profil aufweisenden äußeren Teil des Rotorblattes zu verhindern. Dazu wird dort ein Grenzschichtzaun an dem Bereich vorgeschlagen, an dem das Rotorblatt von seinem etwa zylindrischen Wurzelbereich zu dem Bereich übergeht, der ein aerodynamisches Profil aufweist. Ein zweiter Grenzschichtzaun kann zur Unterstützung vorgesehen sein.

Die vorliegende Erfindung betrifft dagegen ein gänzliches anderes Problem, nämlich einen Strömungsabriss insbesondere bedingt durch Blattverunreinigungen zu verhindern oder zumindest auf einen vorbestimmten Bereich einzugrenzen. Dabei betrifft die vorliegende Erfindung insbesondere Rotorblätter, die ihre größte Profiltiefe unmittelbar in ihrem Wurzelbereich zum Befestigen an einer Rotornabe hat. Mit anderen Worten betrifft die vorliegende Erfindung insbesondere Rotorblätter, die auf ihrer vollständigen Axial- bzw. Radiallänge ein aerodynamisches Profil aufweisen.

Dafür wird vorgeschlagen, dass der erste Grenzschichtzaun in einem Bereich von 25 bis 40% angeordnet ist und dass der zweite Grenzschichtzaun an dem Rotorblatt in einem Bereich von 45 bis 60% angeordnet ist. Diese Angaben beziehen sich auf die radiale Richtung des Rotorblattes bei bestimmungsgemäßer Verwendung in dem aerodynamischen Rotor der Windenergieanlage. Demnach wäre ein Wert von 0% genau bei der Drehachse des aerodynamischen Rotors und ein Wert von 100% an der Rotorblattspitze des Rotorblattes.

Vorzugsweise ist der erste Grenzschichtzaun in einem Bereich von 30 bis 35% in radialer Richtung angeordnet und außerdem oder alternativ ist der zweite Grenzschichtzaun an dem Rotorblatt in radialer Richtung in einem Bereich von 50 bis 55% angeordnet. Hierdurch wird ein entsprechend konkreter mittlerer Bereich des Rotorblattes mit diesen beiden Grenzschichtzäunen versehen und zwischen diesen beiden eingeschlossen. Die vorgeschlagene Maßnahme kann sich somit konkret auf diesen mittleren Bereich konzentrieren.

Vorzugsweise ist der erste und der zweite Grenzschichtzaun jeweils an der Saugseite des Rotorblattes angeordnet. Insbesondere wurde erkannt, dass hier die meisten Probleme mit einem Strömungsabriss auftreten können, so dass insbesondere hier die Grenzschichtzäune vorgesehen werden. Vorzugsweise ist nicht nur jeweils ein Grenzschichtzaun an der Saugseite des Rotorblattes angeordnet, sondern jeder Grenzschichtzaun weist zwei Zaunabschnitte auf, von denen ein Zaunabschnitt an der Saugseite und der andere Zaunabschnitt an der Druckseite des Rotorblattes angeordnet ist. Hierbei wurde erkannt, dass eine Unterstützung des Grenzschichtzauns der Saugseite durch einen Zaunabschnitt an der Druckseite die vorgeschlagene aerodynamische Maßnahme noch verbessern kann. Etwaige Strömungsabrissphänomene können damit noch wirksamer auf diesen mittleren Bereich des Rotorblattes beschränkt werden.

Gemäß einer Ausführungsform ist jeder Grenzschichtzaun so ausgebildet, dass er von der Blattnase zur Hinterkante verlaufend in seiner Höhe zunimmt. Insoweit wird von einem üblichen Rotorblatt ausgegangen, das etwa in Bewegungsrichtung eine Blattnase oder Rotorblattnase aufweist und zu dieser abgewandt, also im Grunde nach hinten, eine Hinterkante aufweist. Vorzugsweise orientiert sich die Höhe des Grenzschichtzauns an der Dicke der Grenzschicht der das Blatt anströmenden Luft. Diese Grenzschicht wird als der Bereich angenommen, bei dem die anströmende Luftgeschwindigkeit einen so großen Abstand zur Blattoberfläche hat, dass sie 90% der ungebremsten Strömungsgeschwindigkeit der Luft erreicht hat. Hierbei wird die Strömungsgeschwindigkeit der Luft relativ zu dem Rotorblatt an der betreffenden Stelle zugrunde gelegt.

Es hat sich nun herausgestellt, dass diese Grenzschicht von der Blattnase zur Hinterkante einen zunehmenden Abstand aufweist. Gemäß einer Ausführungsform wird vorgeschlagen, dass sich die Höhe des Grenzschichtzauns daran orientiert.

Diese Ausführungen zur Höhe des Grenzschichtzauns setzen einen Grenzschichtzaun voraus, der etwa als flaches, senkrecht zur Blattoberfläche und längs zur Anströmrichtung ausgebildetes Objekt ausgestaltet ist, also etwa stegförmig ausgebildet ist. Außerdem sind die Ausführungen auch anzuwenden für Grenzschichtzaunabschnitte, die vereinfachend auch als Zaunabschnitte bezeichnet wurden, wenn der Grenzschichtzaun jeweils einen Zaunabschnitt auf der Saugseite und einen auf der Druckseite aufweist.

Insbesondere beginnt der Grenzschichtzaun in der Nähe der Blattnase, z.B. bezogen auf eine Sehne des Blattprofils an der betreffenden Stelle bei 5 bis 10% hinter der Blattnase. Hier beginnt der Grenzschichtzaun bzw. der Zaunabschnitt mit einer geringen Höhe von 0 bis 5 mm und erhöht sich dann kontinuierlich bis zu einer Höhe von über 15 mm, insbesondere über 20 mm. Diese Erhöhung kann bei dem ersten Grenzschichtzaun bzw. dessen Zaunabschnitten auf über 30 mm ansteigen. Vorzugsweise ist der Grenzschichtzaun in seinem hinteren Bereich, insbesondere hinteren Drittel, in seiner Höhe gleichbleibend, nämlich gleichbleibend hoch. Hierdurch kann sich dieser an die Position der Grenzschicht anpassen und es werden unnötig große Höhen und damit unnötige Angriffsflächen vermieden und schließlich auch Materialeinsparungen gegenüber einer Variante mit gleichbleibend großer Höhe erreicht.

Vorzugsweise ist somit jeder Grenzschichtzaun bzw. Zaunabschnitt als Steg ausgebildet und dieser Steg weist einen Basisabschnitt und einen Rückenabschnitt ab. Mit dem Basisabschnitt ist der Steg auf der Rotorblattoberfläche, also auf der Saugseite oder Druckseite befestigt und die andere, freie Seite des Stegs bildet der Rückenabschnitt. Der Basisabschnitt folgt somit dem Blattprofil. Der Rückenabschnitt ist ebenfalls wie das Blattprofil ausgebildet, aber an einer anderen Position. Hierzu wird eine Konturlinie zugrunde gelegt, die in ihrer Form dem Blattprofil entspricht, die aber um eine Dreh-/Rotationsachse gegenüber dem Blattprofil verdreht/rotiert ist. Diese Betrachtungsweisen gehen von einem Profilschnitt im Bereich des jeweils betrachteten Grenzschichtzauns aus. Es wird somit zunächst eine Konturlinie angenommen, die dem Blattprofil, z.B. an der Saugseite, folgt. Dann wird, gedanklich, eine Drehachse angesetzt, vorzugsweise im Bereich der Blattnase. Um diese Drehachse wird dann diese Konturlinie - gedanklich - rotiert, insbesondere um einen Winkel von etwa 1 bis 3°, so dass diese Konturlinie dann mit dem Blattprofil einen gemeinsamen Punkt in der Drehachse hat, sich ansonsten aber nach hinten zur Hinterkante hin kontinuierlich von dem Blattprofil, also in diesem Beispiel von der Saugseite, entfernt. Der Grenzschichtzaun bzw. Grenzschichtzaunabschnitt verläuft somit zwischen dem Blattprofil und dieser gedrehten Konturlinie.

Entsprechend wird, wenn ein Zaunabschnitt an der Druckseite vorgesehen ist, die Konturlinie der Druckseite zugrunde gelegt und sie bildet den Verlauf der Basis des Stegs und die dazu gedrehte Konturlinie bildet den Verlauf des Rückens des Stegs. Der Drehsinn um dieselbe Achse, ist dabei genau umgekehrt, wie bei der Ausbildung des saugseitigen Grenzschichtzaunes.

Im vorderen Bereich zur Blattnase, also insbesondere im Bereich von 5 bis 10% bezogen auf die Sehne des Blattes, wäre die Höhe des Steges hierbei so gering, dass der Steg dort nicht ausgebildet zu werden braucht und es ausreichend ist, wenn der Steg in einem entsprechenden Abstand zur Blattnase erst beginnt. Dies gilt sowohl für die Saugseite als auch für die Druckseite.

Vorzugsweise orientiert sich die Höhe des Grenzschichtzauns an der zwei- bis fünffachen, insbesondere drei- bis vierfachen Größe der Verdrängungsdicke der Grenzschicht in dem entsprechenden Bereich.

Zudem wurde auch erkannt, dass eine geringe Höhe des Grenzschichtzauns zur Blattnase hin ausreichend sein kann, weil Strömungsabrisse, die durch die vorgeschlagenen Maßnahmen verhindert werden sollen, erst im mittleren oder sogar hinteren Bereich des Blattes bzw. des Blattprofils auftreten. Entsprechend ist eine höhere Höhe des Grenzschichtzauns mit zunehmender Position zur Hinterkante hin vorteilhaft.

Eine weitere Ausführungsform schlägt vor, dass der erste und zweite Grenzschichtzaun unterschiedliche Höhen aufweisen, insbesondere unterschiedliche mittlere Höhen aufweisen. Soweit die Grenzschichtzäune als Steg ausgebildet sind mit einem Stegrücken, der der gedrehten Profillinie folgt, ergibt sich auf der gesamten Länge des Stegs eine höhere Höhe des ersten Grenzschichtzauns gegenüber dem zweiten Grenzschichtzaun. Als Vergleich wird vereinfachend eine mittlere Höhe der beiden Grenzschichtzäune zugrunde gelegt, die beispielsweise ein arithmetisches Mittel der Höhe des Verlaufs des jeweiligen Grenzschichtzauns sein kann. Weist der Grenzschichtzaun auch einen Zaunabschnitt an der Druckseite auf, sind diese Überlegungen und Schilderungen sinngemäß auf die Höhe des jeweiligen Zaunabschnitts anzuwenden.

Jedenfalls wird vorgeschlagen, dass der erste Grenzschichtzaun, also derjenige, der näher zur Rotornabe hin angeordnet ist, wenigstens 30%, insbesondere wenigstens 50% höher ist als der zweite Grenzschichtzaun. Hierbei wurde erkannt, dass für den äußeren Grenzschichtzaun eine geringe Höhe ausreichend ist, was aerodynamisch vorteilhaft sein kann.

Vorzugsweise sind ergänzend Wirbelgeneratoren vorgesehen. Solche Wirbelgeneratoren, die etwa im vorderen Drittel zur Blattnase hin angeordnet sind und sich vorzugsweise auf der Saugseite des Rotorblattes befinden, können einem Ablöseeffekt, also einem Strömungsabriss am Blattprofil entgegenwirken. Insbesondere können sie bewirken, dass sich eine Position eines solchen Strömungsabrisses weiter zur Hinterkante verlegt und damit die aerodynamischen Nachteile durch den Strömungsabriss zumindest vermindert werden. Gelingt es, diesen Strömungsabriss - gedanklich - bis zur Hinterkante zu verschieben, tritt er faktisch nicht mehr auf.

Vorzugsweise wird vorgeschlagen, dass diese Wirbelgeneratoren nur zwischen dem ersten und zweiten Grenzschichtzaun angeordnet werden. Ihre Wirkung ist somit auf diesen Bereich beschränkt und diese wird auch durch die Grenzschichtzäune zum äußeren bzw. inneren Bereich des Rotorblattes abgeschirmt. Insbesondere wird hierbei auch dem Problem Rechnung getragen, dass solche Wirbelgeneratoren eine unerwünschte Geräuschquelle sein können. Durch die Anordnung ausschließlich in diesem Bereich zwischen den beiden Grenzschichtzäunen kann somit auch ein Geräuschpegel begrenzt werden, indem eine in radialer Richtung unnötig weite Belegung mit Wirbelgeneratoren vermieden wird/werden kann.

Vorzugsweise ist das Rotorblatt für eine Schwachwindanlage ausgelegt, also für eine Windenergieanlage, die für einen Schwachwindstandort vorgesehen ist. Somit adressieren die vorgeschlagenen Lösungen insbesondere einen problematischen Mittelbereich eines solchen Rotorblatts einer Schwachwindanlage.

Vorzugsweise wird ein Rotorblatt zugrunde gelegt, das seine größte Profiltiefe unmittelbar an seiner Blattwurzel zum Befestigen an der Rotornabe aufweist. Es wird also kein Rotorblatt verwendet, das sich zur Nabe hin wieder verschlankt und einen im Wesentlichen zylindrischen Bereich aufweist, der nicht als Blattprofil ausgelegt ist. Mit anderen Worten betreffen die vorliegenden Lösungen somit keine Effekte, die zwischen einem Profilbereich des Rotorblattes und einem unprofilierten Bereich des Rotorblattes, nämlich einer zylindrischen Blattwurzel, auftreten.

Erfindungsgemäß wird zudem eine Windenergieanlage vorgeschlagen, die mit einem oder mehreren Rotorblättern gemäß wenigstens einer der oben beschriebenen Ausführungsformen ausgestattet ist. Insbesondere wird eine Windenergieanlage mit drei Rotorblättern vorgeschlagen, von denen jedes Rotorblatt wie gemäß einem der obigen Ausführungsformen vorgeschlagen ausgebildet ist.

Ein bevorzugtes Rotorblatt einer Windenergieanlage weist eine Rotorblattwurzel zur Anbindung des Rotorblattes an einer Rotornabe und eine zur Rotorblattwurzel abgewandten Seite angeordneten Rotorblattspitze auf. Dabei weist eine relative Profildicke, die als Verhältnis von Profildicke zu Profiltiefe definiert ist, in einem mittleren Bereich zwischen Rotorblattwurzel und Rotorblattspitze ein lokales Maximum auf. Unter der Profiltiefe wird im Folgenden die Länge des Profils, also der Abstand zwischen Profilnase und Profilhinterkante verstanden. Die Profildicke bezeichnet den Abstand zwischen Profilober- und Profilunterseite. Die relative Profildicke weist somit einen geringen Wert auf, wenn die Profildicke klein ist und/oder die Profiltiefe groß ist.

Die relative Profildicke weist zwischen Rotorblattwurzel und Rotorblattspitze ein lokales Maximum auf. Das lokale Maximum befindet sich im mittleren Bereich zwischen Rotorblattwurzel und Rotorblattspitze, vorzugsweise in einem Bereich von 30 bis 60% der Gesamtlänge des Rotorblattes, gemessen von der Rotorblattwurzel zur Rotorblattspitze. Bei einer Gesamtlänge von bspw. 60 Metern befindet sich das lokale Maximum somit in einem Bereich von vorzugsweise 18 Metern bis 36 Metern. Die relative Profildicke nimmt also zunächst ausgehend von der Rotorblattwurzel ab und steigt dann in dem mittleren Bereich wieder bis zu dem lokalen Maximum an, nämlich bis zu einer Stelle an, in deren Umgebung die relative Profildicke keinen höheren Wert aufweist. Das lokale Maximum im mittleren Bereich des Rotorblatts kommt insbesondere dadurch zustande, dass die Profiltiefe ausgehend von der Rotorblattwurzel bis zum mittleren Bereich stark abnimmt. Gleichzeitig oder alternativ kann die Profildicke erhöht werden bzw. nicht so stark wie die Profiltiefe abnehmen. Dadurch wird eine Materialeinsparung erzielt, insbesondere zwischen Rotorblattwurzel und dem mittleren Bereich, und somit eine Gewichtseinsparung. Durch die Erhöhung der Profildicke wird eine hohe Stabilität des Rotorblattes erzeugt.

Es wurde erkannt, dass eine Abnahme der Profiltiefe im mittleren Bereich zwar dort eine Verringerung der Tragfähigkeit zur Folge haben kann, dass aber gleichzeitig eine Verringerung des Gewichts des Rotorblattes erreicht wird. Eine etwaige Verschlechterung der Effizienz des Rotorblattes wird zum Erreichen eines geringeren Gewichts in Kauf genommen. Dabei wird im mittleren Bereich bei möglichst guter Effizienz aber stärker auf Stabilität und Steifigkeit fokussiert und im äußeren Bereich stärker auf eine hohe Effizienz fokussiert. Somit wird ein Profil vorgeschlagen, bei dem, die Profiltiefe vom mittleren Bereich nach außen zur Rotorblattspitze hin zumindest schwächer abnimmt als im mittleren Bereich.

Vorzugsweise beträgt die relative Profildicke des lokalen Maximums 35% bis 50%, insbesondere 40% bis 45%. Üblicherweise beginnt die relative Profildicke an der Rotorblattwurzel bei einem Wert von 100% bis 40%. Ein Wert von etwa 100% bedeutet dabei, dass die Profildicke in etwa mit der Profiltiefe identisch ist. Danach fällt der Wert monoton ab. In einer erfindungsgemäßen Ausführungsform fällt der Wert ausgehend von der Rotorblattwurzel zunächst ab, bis er ein lokales Minimum erreicht. Nach dem lokalen Minimum verzeichnet die relative Profildicke einen Anstieg bis sie etwa 35% bis 50% beträgt.

In einer bevorzugten Ausführungsform weist das Rotorblatt im mittleren Bereich und/oder im Bereich des lokalen Maximums eine Profiltiefe von 1500mm bis 3500mm, insbesondere etwa 2000mm auf. Wenn das Rotorblatt im Bereich der Rotorblattwurzel eine Profiltiefe von etwa 6000mm aufweist, sinkt die Profiltiefe also bis zum mittleren Bereich und/oder bis zum Bereich des lokalen Maximums um etwa ein Drittel.

Vorzugsweise ist das Rotorblatt für eine Schnelllaufzahl in einem Bereich von 8 bis 11, vorzugsweise von 9 bis 10, ausgelegt. Dabei ist die Schnelllaufzahl als das Verhältnis von Umfangsgeschwindigkeit an der Rotorblattspitze zur Windgeschwindigkeit definiert. Hohe Auslegungsschnelllaufzahlen zusammen mit einem hohen Leistungsbeiwert können durch schlanke, schnell rotierende Blätter erreicht werden.

In einer weiteren Ausführungsform weist das Rotorblatt in einem Bereich von 90% bis 95% der Gesamtlänge des Rotorblattes, gemessen von der Rotorblattwurzel zur Rotorblattspitze, eine Profiltiefe auf, welche etwa 5% bis 15%, insbesondere etwa 10% der Profiltiefe im Bereich der Rotorblattwurzel entspricht.

Durch eine solche reduzierte Profiltiefe im Bereich der Rotorblattspitze werden auf den Maschinenbau und den Turm wirkende Lasten, insbesondere aerodynamische Lasten, reduziert. Es wird im Grunde ein verhältnismäßig schlankes Rotorblatt vorgeschlagen.

In einer bevorzugten Ausführungsform weist das Rotorblatt bei der Rotorblattwurzel eine Profiltiefe von wenigstens 3900 mm, insbesondere in einem Bereich von 3000 mm bis 8000 mm auf und/oder im Bereich von 90% bis 95% der Gesamtlänge, insbesondere bei 90%, ausgehend von der Rotorblattwurzel, eine Profiltiefe von maximal 1000 mm, insbesondere in einem Bereich von 700 mm bis 300 mm auf.

Vorzugsweise weist das Rotorblatt im mittleren Bereich, insbesondere bei 50% der Gesamtlänge des Rotorblattes und/oder im Bereich des lokalen Maximums eine Profiltiefe auf, welche etwa 20% bis 30%, insbesondere etwa 25%, der Profiltiefe im Bereich der Rotorblattwurzel entspricht. Beträgt beispielsweise die Profiltiefe im Bereich der Rotorblattwurzel 6000 mm, entspricht die Profiltiefe im Bereich des lokalen Maximums und/oder im mittleren Bereich nur noch etwa 1500 mm. Durch diese schnelle Abnahme der Profiltiefe von der Rotorblattwurzel bis zum mittleren Bereich entsteht ein schlankes Profil mit geringen Lasten, insbesondere aerodynamischen Lasten. Die Lasten sind geringer als bei anderen bekannten Rotorblättern. Bei den bekannten Profilen nimmt die Rotorblatttiefe üblicherweise im Wesentlichen linear ab. Dadurch ist insbesondere zwischen der Rotorblattwurzel und dem mittleren Bereich eine höhere Profiltiefe vorhanden und somit auch mehr Material.

Vorzugsweise wird eine Windenergieanlage für einen Schwachwindstandort mit wenigstens einem Rotorblatt nach wenigstens einer der vorstehenden Ausführungen vorgeschlagen. Eine solche Windenergieanlage ist durch wenigstens ein schlankes und schnell rotierendes Rotorblatt durch eine hohe Auslegungsschnelllaufzahl und einen hohen Leistungsbeiwert wirtschaftlich effizient. Die Windenergieanlage ist dadurch insbesondere auch für den Betrieb im Teillastbereich und/oder für schwachen Wind und somit auch für Binnenstandorte geeignet. Die Windenergieanlage weist vorzugsweise drei Rotorblätter auf.

Nachfolgend wird die Erfindung anhand von Ausführungsbeispielen unter Bezugnahme auf die begleitenden Figuren exemplarisch erläutert. Die Figuren enthalten dabei teilweise vereinfachte, schematische Darstellungen.
- Fig. 1: zeigt eine schematische Darstellung eines Rotorblattes.
- Fig. 2: zeigt ein Diagramm, in dem die relative Profildicke qualitativ über dem normierten Rotorradius dargestellt ist.
- Fig. 3: zeigt ein Diagramm, in dem die Tiefe qualitativ über dem Radius dargestellt ist.
- Fig. 4: zeigt ein Diagramm, in dem die Dicke qualitativ über dem Radius dargestellt ist.
- Fig. 5: zeigt eine Windenergieanlage in einer perspektivischen Ansicht.
- Fig. 6: zeigt ein Rotorblatt in einer Seitenansicht.
- Fig. 7: zeigt das Rotorblatt der Figur 6 in einer weiteren Seitenansicht.
- Fig. 8: zeigt einen lokalen Leistungsbeiwert cp_loc qualitativ für zwei Zustände abhängig der radialen Position an dem Rotorblatt.
- Fig. 9: zeigt den ersten und zweiten Grenzschichtzaun in einer rotorblattaxialen Ansicht.
- Fig. 10: zeigt ein Rotorblatt in zwei Ansichten.
- Fig. 11: zeigt einen Teil eines Rotorblattes in einer perspektivischen Ansicht.
- Fig. 12: zeigt einige Wirbelgeneratoren exemplarisch in einer perspektivischen Ansicht.

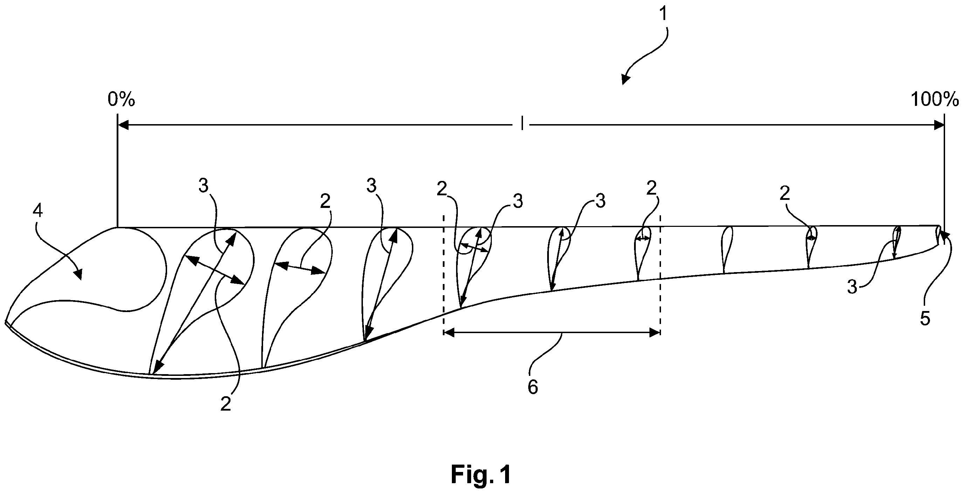

Fig. 1 zeigt eine Verteilung verschiedener Profilgeometrien eines Rotorblattes 1 einer Ausführungsform. In dem Rotorblatt 1 sind abschnittsweise Profildicken 2 und Profiltiefen 3 dargestellt. Das Rotorblatt 1 weist an einem Ende die Rotorblattwurzel 4 und an dem dazu abgewandten Ende einen Anschlussbereich 5 zum Anbringen einer Rotorblattspitze auf. An der Rotorblattwurzel 4 weist das Rotorblatt eine große Profiltiefe 3 auf. Im Anschlussbereich 5 ist die Profiltiefe 3 dagegen sehr viel kleiner. Die Profiltiefe nimmt, ausgehend von der Rotorblattwurzel 4, die auch als Profilwurzel 4 bezeichnet werden kann, bis zu einem mittleren Bereich 6 deutlich ab. In dem mittleren Bereich 6 kann eine Trennstelle vorgesehen sein (hier nicht dargestellt). Vom mittleren Bereich 6 bis zum Anschlussbereich 5 ist die Profiltiefe 3 nahezu konstant. Das gezeigte Rotorblatt 1 ist zum Anbringen einer kleinen Rotorblattspitze vorgesehen, die weniger als 1% der Länge des gezeigten Rotorblatts 1 ausmacht und daher hier vernachlässigt werden kann.

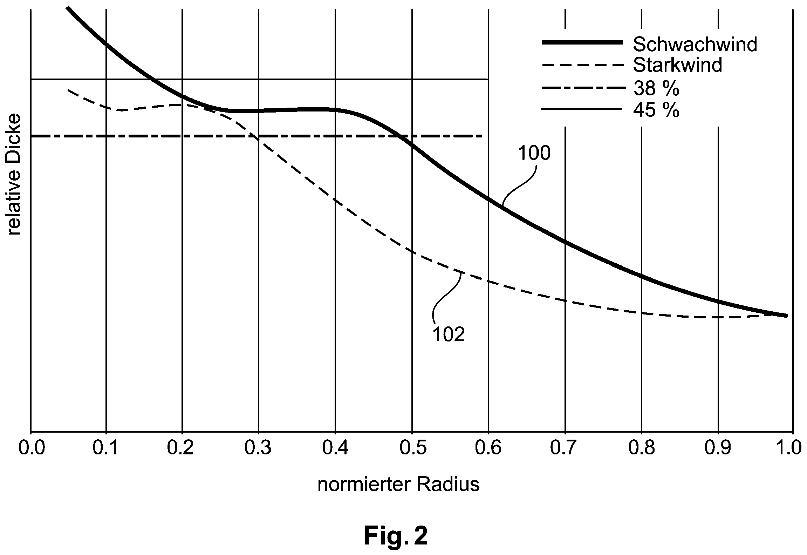

Fig. 2 zeigt ein Diagramm, in dem für zwei verschiedene Rotorblätter einer Windenergieanlage jeweils die relative Profildicke über den normierten Rotorradius eingezeichnet ist. Die relative Profildicke, nämlich das Verhältnis von Profildicke zu Profiltiefe, kann in % angegeben werden, wobei es hier auf den qualitativen Verlauf ankommt und daher keine Werte abgetragen sind. Es sind nur die Werte für 38% und 45% zur Orientierung eingezeichnet. Der Rotorradius bezieht sich hierbei jeweils auf einen Rotor mit wenigstens einem an einer Rotornabe des Rotors montierten Rotorblatt. Die Länge des jeweiligen Rotorblattes erstreckt sich von der Rotorblattwurzel zur Rotorblattspitze. Das Rotorblatt beginnt mit seiner Rotorblattwurzel etwa bei einem Wert von 0,05 des normierten Rotorradius und endet mit seiner Rotorblattspitze bei dem Wert 1 des normierten Rotorradius. Im Bereich der Rotorblattspitze entspricht der Wert des normierten Rotorradius etwa der prozentualen Länge des betreffenden Rotorblattes. Insbesondere ist der Wert 1 des normierten Rotorradius gleich 100% der Rotorblattlänge.

In dem Diagramm sind zwei Graphen 100 und 102 zu erkennen. Der Graph 100 stellt den Verlauf der relativen Profildicke einer Windenergieanlage für einen Schwachwindstandort dar und der Graph 102 stellt einen Verlauf einer Windenergieanlage für Standorte mit höheren mittleren Windgeschwindigkeiten dar. Anhand der Graphen ist zu erkennen, dass der Verlauf der relativen Profildicke des Graphen 102 im Wesentlichen monoton fallend verläuft. Der Graph 102 beginnen im Bereich der Rotorblattwurzel, also zwischen einem normierten Rotorradius von 0,0 und 0,1 bei einer relativen Profildicke unter 45%. Die Werte der relativen Profildicke nehmen stetig ab.

Der Graph 100 der Schwachwindanlage beginnt bei einer deutlich höheren relativen Profildicke. Und fällt erst bei etwa 15% der normierten Rotorposition unter die eingezeichnete 45%-Marke der relativen Profildicke und verlässt diesen Bereich erst bei etwa 50% des normierten Radius. Bei einer normierten radialen Position von etwa 45% ist der Unterschied der relativen Profildicke zwischen der Schwachwindanlage gemäß Graph 100 und der Starkwindanlage gemäß Graph 102 am größten.

Die Darstellung zeigt somit, dass bei der Schwachwindanlage die Abnahme der relativen Dicke sehr weit nach außen verlagert ist, im Vergleich mit der Starkwindanlage. Besonders für Bereich von 40% bis 45%, an dem die relative Dicke im Vergleich zur Starkwindanlage am größten ist, wird vorgeschlagen, Grenzzäune zum vorzusehen, die diesen Bereich einfassen können und/oder es werden hier Wirbelgeneratoren vorgesehen.

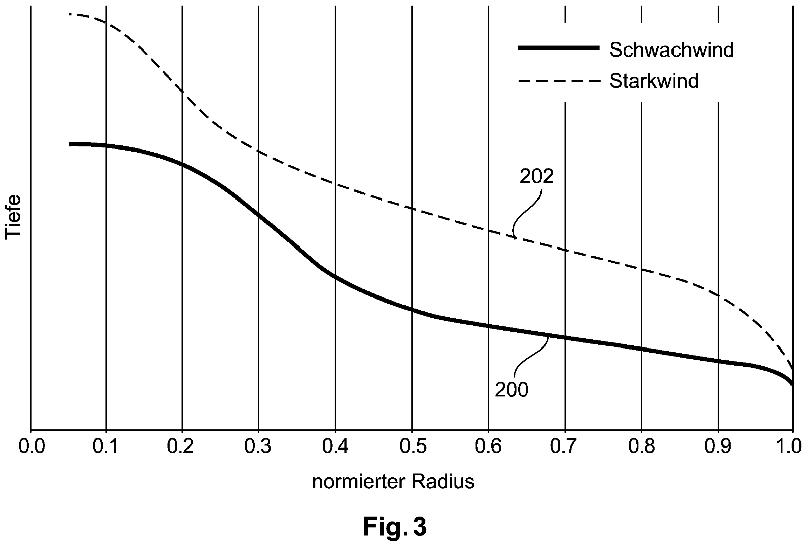

In Fig. 3 ist ein Diagramm dargestellt, welches die Profiltiefe - in dem Diagramm vereinfacht als Tiefe bezeichnet - qualitativ in Abhängigkeit des Rotorradius zeigt, dessen Werte auf den maximalen Radius des jeweils zugrunde liegenden Rotors normiert. Der Graph 200 zeigt den Verlauf für eine Schwachwindanlage, die auch der Darstellung der Figur 2 zugrunde lag, wohingegen der Graph 202 den Verlauf einer Starkwindanlage zeigt, die auch der Figur 2 zugrunde lag. Darin ist zu erkennen, dass die Schwachwindanlage sehr früh, als schon etwa auf der Hälfte des gesamten Radius, eine vergleichsweise geringe Tiefe aufweist, verglichen mit der Starkwindanlage.

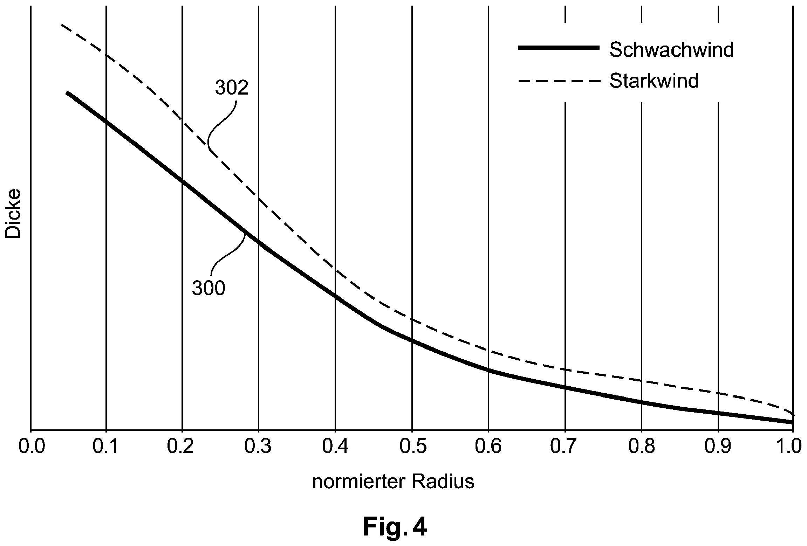

Fig. 4 zeigt ein Diagramm, in dem zu den Profiltiefen der Figur 3 jeweils die Profildicke - in dem Diagramm vereinfacht als Dicke bezeichnet - dargestellt ist. Auch hier sind die Graphen 300 für die Schwachwindanlage und 402 für die Starkwindanlage nur qualitativ über den normierten Radius dargestellt. Den Graphen 100, 200 und 300 einerseits und den Graphen 102, 202 und 402 liegen jeweils dieselbe Windenergieanlage zugrunde.

Es ist zu erkennen, dass die Dickenverläufe 300 und 302 für beide Anlagentypen ganzähnlich sind, um die jeweilige Strukturstabilität zu gewährleisten. Für die Schwachwindanlage wird nun aber im äußeren Rotorbereich eine geringere Tiefe vorgegeben, um den besonderen Bedingungen Rechnung zu tragen, wie Graph 200 der Figur 3 im Vergleich zum Graphen 202 zeigt. Daraus ergibt sich der charakteristische Verlauf der relativen Dicke gemäß Graph 100 mit dem Plateau im Bereich um etwa 40%, wie Figur 2 zeigt.

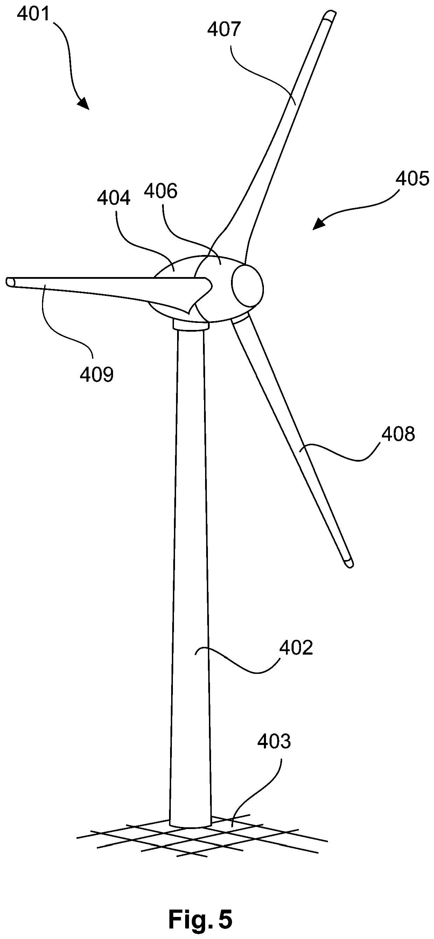

Fig. 5 zeigt eine Windenergieanlage 400 mit einem Turm 402, der auf einem Fundament 403 errichtet ist. Am oberen, dem Fundament 403 gegenüberliegenden Ende befindet sich eine Gondel 404 (Maschinenhaus) mit einem Rotor 405, der im Wesentlichen aus einer Rotornabe 406 und daran angebrachten Rotorblättern 407, 408 und 409 besteht. Der Rotor 405 ist mit einem elektrischen Generator im Innern der Gondel 404 zur Wandlung von mechanischer Arbeit in elektrische Energie gekoppelt. Die Gondel 404 ist drehbar auf dem Turm 402 gelagert, dessen Fundament 403 die notwendige Standsicherheit gibt.

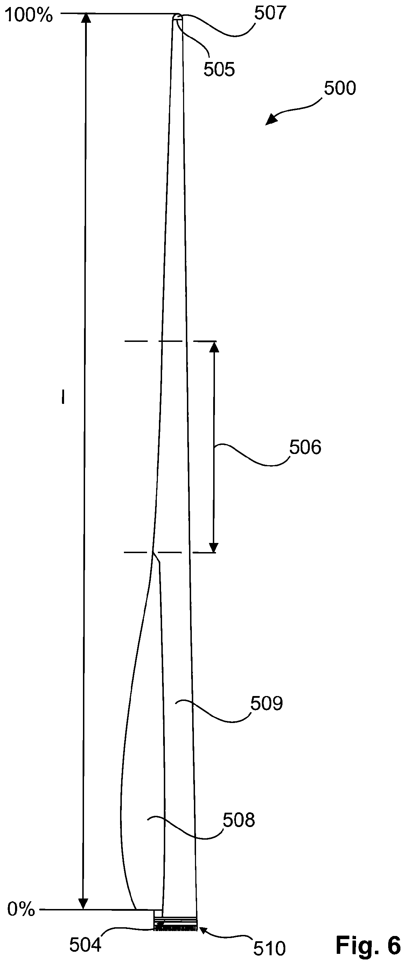

Fig. 6 zeigt eine Seitenansicht eines Rotorblattes 500 einer Ausführungsform über seine Gesamtlänge I, d.h. von 0% bis 100%. Das Rotorblatt 500 weist an einem Ende eine Rotorblattwurzel 504 und an dem dazu abgewandten Ende eine Rotorblattspitze 507 auf. Die Rotorblattspitze 507 ist an einem Anschlussbereich 505 mit dem restlichen Teil des Rotorblattes verbunden. An der Rotorblattwurzel 504 weist das Rotorblatt eine große Profiltiefe auf. Im Anschlussbereich 505 und an der Rotorblattspitze 507 ist die Profiltiefe dagegen sehr viel kleiner. Die Profiltiefe nimmt, ausgehend von der Rotorblattwurzel 504, die auch als Profilwurzel 504 bezeichnet werden kann, bis zu einem mittleren Bereich 506 deutlich ab. In dem mittleren Bereich 506 kann eine Trennstelle vorgesehen sein (hier nicht dargestellt). Vom mittleren Bereich 506 bis zum Anschlussbereich 505 ist die Profiltiefe nahezu konstant.

Das Rotorblatt 500 weist im Bereich der Rotorblattwurzel 504 eine zweigeteilte Form auf. Das Rotorblatt 500 besteht somit aus einem Grundprofil 509, an das in dem Bereich der Rotorblattwurzel 504 ein weiterer Abschnitt 508 zur Erhöhung der Rotorblatttiefe des Rotorblattes 500 angeordnet ist. Der Abschnitt 508 ist dabei beispielsweise an das Grundprofil 509 angeklebt. Eine solche zweigeteilte Form ist einfacher in der Handhabung beim Transport zum Aufstellungsort und einfacher zu fertigen.

Weiterhin ist in Figur 6 ein Nabenanschlussbereich 510 zu erkennen. Über den Nabenanschlussbereich 510 wird das Rotorblatt 500 an die Rotornabe angeschlossen.

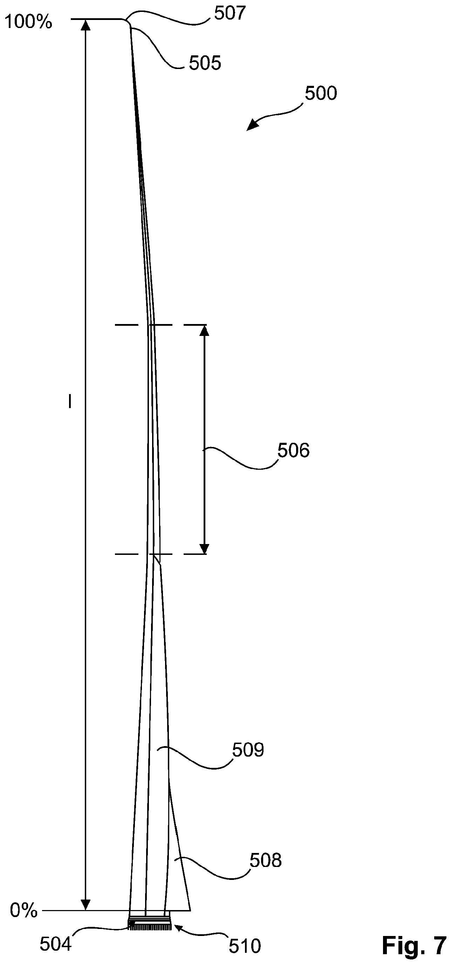

Figur 7 zeigt eine weitere Seitenansicht des Rotorblattes 500 der Figur 6. Es ist das Rotorblatt 500 mit dem Grundprofil 509, dem Abschnitt 508 zur Erhöhung der Rotorblatttiefe, der mittlere Bereich 506, die Rotorblattwurzel 504 und der Nabenanschlussbereich 510 sowie der Anschlussbereich 505 zur Rotorblattspitze 507 zu erkennen. Die Rotorblattspitze 507 ist als ein sogenanntes Winglet ausgeführt. Dadurch werden Wirbel an der Rotorblattspitze verringert.

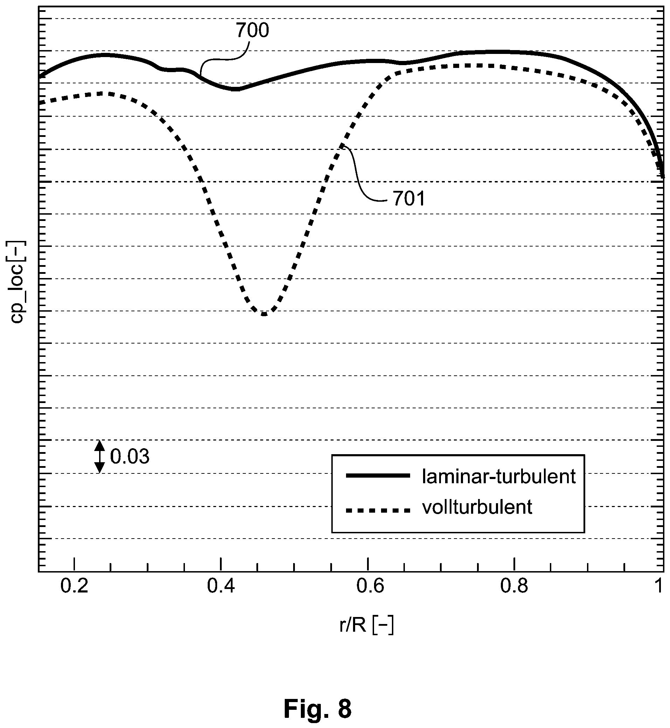

Die Fig. 1 bis 7 veranschaulichen ein Rotorblatt bzw. eine Windenergieanlage zunächst ohne Darstellung der Grenzschichtzäune und auch ohne Darstellung von Wirbelgeneratoren. Fig. 8 veranschaulicht ein Problem, das bei einem zugrunde liegenden Blatt einer Schwachwindanlage auftreten kann. Die Darstellung zeigt zwei verschiedene Verläufe des lokalen Leistungsbeiwertes, qualitativ abgetragen über den relativen Radius des Rotorblattes, nämlich des aktuellen Radius r bezogen auf den Maximalradius R des zugrunde liegenden Rotors. Somit entspricht der Wert 1, also 100%, der Position der Blattspitze und der Wert 0, also 0%, der Drehachse des zugrunde liegenden Rotors. Da das Blatt nicht bis zum Nullpunkt reicht, beginnt die Darstellung etwa bei 0,15. Der Untersuchung liegt eine Schnelllaufzahl von 9 (λ=9) zugrunde.

Die beiden Kurven sind Simulationsergebnisse einer dreidimensionalen numerischen Strömungssimulation. Sie zeigen den lokalen Leistungsbeiwert quantitativ für zwei gleiche, aber unterschiedlich verschmutzte Rotorblätter. Es zeigt die obere Kurve 700 das Ergebnis für ein im Grunde optimales Rotorblatt, das insbesondere keine Verschmutzungen aufweist. Dies ist jeweils mit der Bezeichnung "laminar-turbulent" versehen. Die untere Kurve 701 zeigt das Ergebnis für im Grunde dasselbe Rotorblatt, aber ohne optimale Zustände, nämlich mit Verschmutzungen, die auch Regen bzw. Regentropfen auf dem Blatt betreffen können. Dies wird in der Fig. 8 als "vollturbulent" bezeichnet.

Bei ungünstigen Voraussetzungen in einem mittleren Bereich des Rotorblattes können Einbrüche des lokalen Leistungsbeiwertes auftreten.

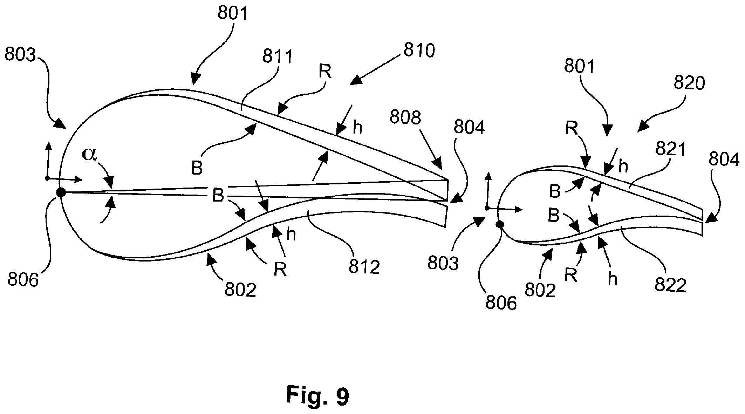

Fig. 9 zeigt einen ersten Grenzschichtzaun 810 und einen zweiten Grenzschichtzaun 820. Beide weisen einen Saugseitenabschnitt 811 bzw. 821 und einen Druckseitenabschnitt 812 bzw. 822 auf. Jeder dieser Abschnitte 811, 812, 821 und 822 ist als Steg ausgebildet und weist einen Basisabschnitt B und einen Rückenabschnitt R auf, die hier vereinfachend mit denselben Buchstaben bezeichnet werden, um die funktionale Ähnlichkeit zu betonen. Jeder Basisabschnitt B kennzeichnet somit gleichzeitig das Profil des Blattes in dem jeweils gezeigten Profilschnitt, nämlich für die Saugseite 801 bzw. die Druckseite 802. Sämtliche Zaunabschnitte 811, 812, 821 und 822 nehmen in ihrer Höhe von einem Bereich in der Nähe der Rotorblattnase 803 zur Hinterkante 804 kontinuierlich zu. Die Bezugszeichen 801 bis 804 sind insoweit für beide Grenzschichtzäune 810 und 820 gleich, weil sie dasselbe Rotorblatt betreffen, lediglich in den beiden Ansichten der Fig. 9 an unterschiedlichen radialen Positionen gezeigt werden.

Die Fig. 9 zeigt auch für beide Grenzschichtzäune 810 und 820 eine Drehachse 806, um die die Druckseiten- bzw. Saugseitenkontur gedreht ist, um die Kontur des betreffenden Rückenabschnitts R zu erhalten. Dies ist nur für den ersten Grenzschichtzaun 810 veranschaulicht und es ist dort nur für den Saugseitenabschnitt 811 veranschaulicht, ist aber sinngemäß auf den Druckabschnitt 812 und auch den Grenzschichtzaun 820, nämlich jeweils den Saugseitenabschnitt 821 und den Druckseitenabschnitt 822 sinngemäß übertragbar.

Die Kontur für den Rückenabschnitt R ist somit um den Drehwinkel α gedreht und dies macht sich entsprechend am stärksten am Endbereich 808 bemerkbar. Der Drehwinkel α kann für die unterschiedlichen Grenzschichtzaunabschnitte 811, 812, 821 und 822 unterschiedlich ausfallen. Durch diese Auslegung ergibt sich somit für die Zaunabschnitte eine Höhe h gegenüber der jeweiligen Blattoberfläche. Die Höhe h verändert sich entlang des jeweiligen Stegs, nimmt nämlich von der Blattnase 803 zur Hinterkante 804 hin zu. Diese Höhe h variiert somit entlang des jeweiligen Steges und kann auch für die unterschiedlichen Zaunabschnitte 811, 812, 821 und 822 unterschiedlich ausfallen. Zur Veranschaulichung der funktionalen Zusammenhänge ist aber die Variable h für jeden Zaunabschnitt 811, 812, 821 und 822 gewählt worden.

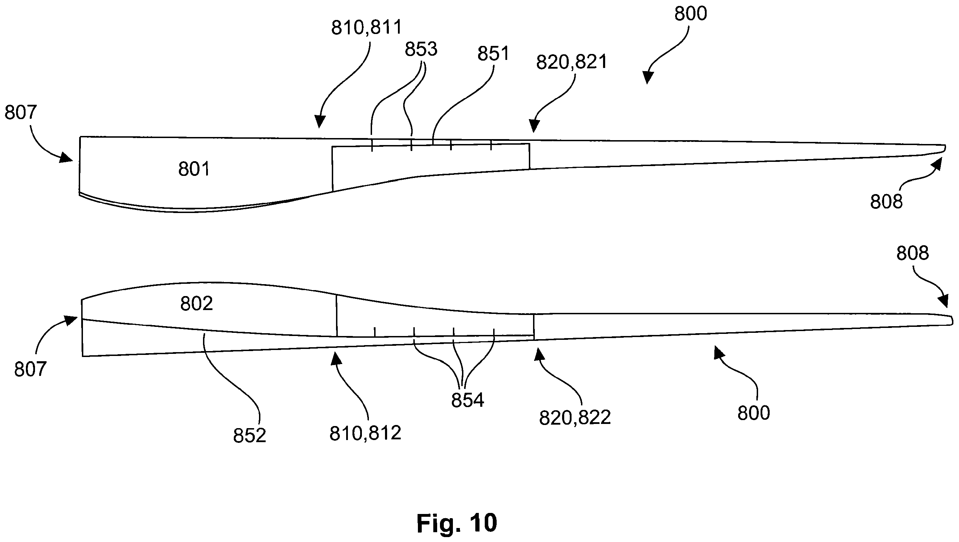

Fig. 10 zeigt ein Rotorblatt 800 in zwei Ansichten, nämlich eine Draufsicht auf die Saugseite 801 und eine Draufsicht auf die Druckseite 802. Dabei ist das Rotorblatt 800 vom Wurzelbereich 807 bis zur Blattspitze 808 gezeigt und die jeweilige Draufsicht bezieht sich auf den Bereich der Blattspitze 808. Der Wurzelbereich 807 ist dabei gegenüber dem Blattspitzenbereich 808 verdreht, was bis zu 45 bis 50° betragen kann, so dass der Wurzelbereich 807 nicht den breitesten Bereich, also nicht die größte Profiltiefe aufzuweisen scheint, was aber nur ein Phänomen der perspektive auf diesen verdrehten Bereich ist.

Fig. 10 zeigt die Position des ersten Grenzschichtzauns 810 und des zweiten Grenzschichtzauns 820 und damit die Position der beiden Zaunabschnitte 811 und 821 der Saugseite und der Zaunabschnitte 812 und 822 der Druckseite. In dem gezeigten Beispiel liegt ein Rotorblatt 800 eines Rotors mit einem Radius von 46 m zugrunde. Der erste Grenzschichtzaun 810 ist dabei bei einer Position von 15 m bezogen auf den Radius des Rotors angeordnet und der zweite Grenzschichtzaun 820 ist an einer Position von 25 m angeordnet.

Fig. 10 zeigt zudem schematisch eine saugseitige und eine druckseitige Positionslinie 851 an der Saugseite 801 bzw. 852 an der Druckseite 802, die jeweils eine Linie bezeichnen, entlang der Wirbelgeneratoren 853 bzw. 854 anzuordnen sind. Die Wirbelgeneratoren 853 und 854, die auch als Vortex-Generatoren bezeichnet werden, sind ebenfalls nur angedeutet und können insbesondere in deutlich höherer Anzahl vorgesehen sein als gezeigt ist. Jedenfalls zeigt diese Ausgestaltung Wirbelgeneratoren 853 auf der Saugseite 801 nur in dem Bereich zwischen dem ersten und zweiten Grenzschichtzaun 810 bzw. 820. Auf der Druckseite 802 sind somit ebenfalls Wirbelgeneratoren 854 vorgesehen, die dort auch außerhalb des Bereichs zwischen den beiden Grenzschichtzäunen 810 und 820 zur Blattwurzel 807 hin angeordnet sein können.

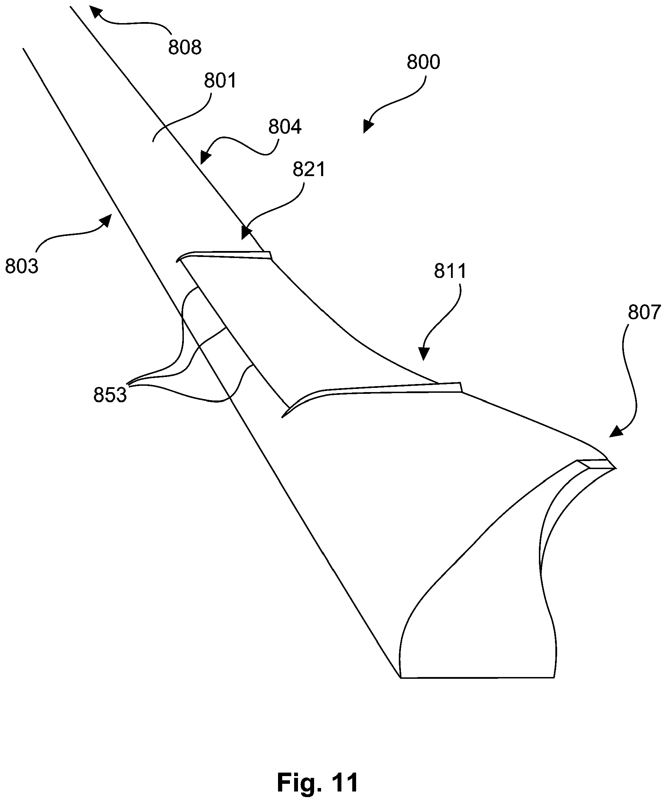

Die perspektivische Darstellung der Fig. 11 zeigt im Grunde einen Ausschnitt aus dem Rotorblatt 800, der im Wesentlichen die Saugseite 801 des Rotorblattes 800 zeigt. Zu erkennen ist die Position und Ausgestaltung der saugseitigen Grenzschichtzaunabschnitte 811 und 821. Ebenfalls wird die Anordnung der Wirbelgeneratoren 853 zwischen diesen Zaunabschnitten 811 und 821 deutlich. Zur Rotorblattnase 803 hin fallen die Grenzschichtzäune bzw. Zaunabschnitte 821 und 811 klein aus und werden zur Hinterkante 804 hin größer, weisen nämlich eine größere Höhe als zur Rotorblattnase 803 hin auf.

Die Grenzschichtzäune sind vorzugsweise in einer Blattschnittebene angebracht welche einem 90° Winkel zur Rotorblattlängsachse steht. Eine fertigungsbedingte Abweichung davon soll einen Toleranzwinkel von 2 bis 5° nicht überschreiten, so dass die Endkante der Grenzschichtzäune, also der zur Blatthinterkante weisende Bereich, nicht mehr als dieser Toleranzwinkel in Richtung Nabe verdreht ist.

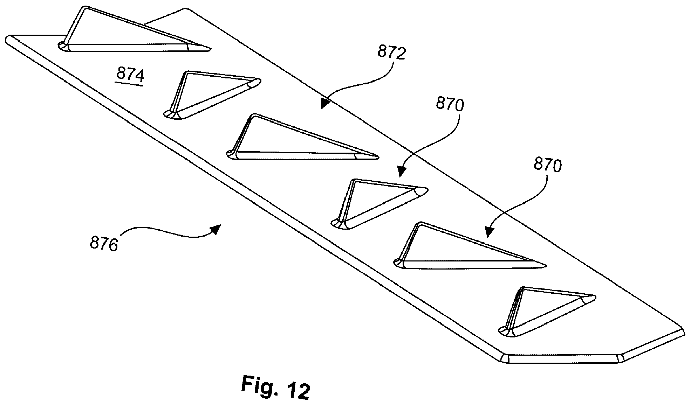

Fig. 12 zeigt einige Wirbelgeneratoren 870 in einer perspektivischen Ansicht. Eine Anströmrichtung ist schematisch mit einem Pfeil 872 eingezeichnet. Die Wirbelgeneratoren sind etwa dreiecksförmig mit plattem Körper ausgebildet, der senkrecht zur Blattoberfläche 874 ausgerichtet ist und dabei schräg zur Anströmrichtung 872 steht und damit schräg zur Bewegungsrichtung des Rotorblattes steht. Dabei alterniert die Schrägstellung von einem Wirbelgenerator 870 zum nächsten. Die Wirbelgeneratoren weisen also eine abwechselnde Schrägstellung zur Anströmrichtung des Windes auf. Die Wirbelgeneratoren entsprechen zudem in ihrer Art und Ausrichtung etwa einer Haifischflosse, nämlich einer Haifischrückenflosse, außer dass die Haifischflosse nicht schräg zur Anströmrichtung steht. Die Wirbelgeneratoren 870 können als Wirbelgeneratorenleiste 876 auf die Rotorblattoberfläche aufgebracht werden.

Nachfolgend werden noch bevorzugte Ausführungsformen für ein Rotorblatt beschrieben, das jeweils, wie oben zu weiteren Ausführungsformen geschildert, mit zwei Grenzschichtzäunen und optional mit Wirbelgeneratoren wie beschrieben versehen sein kann.

### Ausführungsform 1:

Rotorblatt (1) einer Windenergieanlage, mit:
- einer Rotorblattwurzel (4) zur Anbindung des Rotorblattes (1) an eine Rotornabe und
- einer zur Rotorblattwurzel (4) abgewandten Seite angeordneten Rotorblattspitze, wobei eine relative Profildicke (2), die als Verhältnis von Profildicke (2) zu Profiltiefe (3) definiert ist, in einem mittleren Bereich (6) zwischen Rotorblattwurzel und Rotorblattspitze ein lokales Maximum aufweist.

### Ausführungsform 2:

Rotorblatt (1) nach Ausführungsform 1, dadurch gekennzeichnet, dass die relative Profildicke (2) des lokalen Maximums 35% bis 50%, insbesondere 40% bis 45%, beträgt.

### Ausführungsform 3:

Rotorblatt (1) nach einer der Ausführungsformen 1 oder 2, dadurch gekennzeichnet, dass das Rotorblatt (1) im Bereich des lokalen Maximums eine Profiltiefe von 1500 mm bis 3500 mm, insbesondere etwa 2000 mm, aufweist.

### Ausführungsform 4:

Rotorblatt (1) nach einer der vorstehenden Ausführungsformen,
dadurch gekennzeichnet, dass das Rotorblatt (1) für eine Schnelllaufzahl in einem Bereich von 8 bis 11 ausgelegt ist, vorzugsweise von 9 bis 10

### Ausführungsform 5:

Rotorblatt (1) nach einer der vorstehenden Ausführungsformen,
dadurch gekennzeichnet, dass das Rotorblatt (1) in einem Bereich von 90% bis 95%, der Gesamtlänge des Rotorblattes, gemessen von der Rotorblattwurzel zur Rotorblattspitze eine Profiltiefe (3) aufweist, welche etwa 5% bis 15%, insbesondere etwa 10%, der Profiltiefe (3) im Bereich der Rotorblattwurzel (4) entspricht und/oder
dass das Rotorblatt von 5% bis 25% der Gesamtlänge des Rotorblattes, vorzugsweise von 5% bis 35%, insbesondere von der Rotorblattwurzel bis zum mittleren Bereich, einen linearen Dickenverlauf aufweist.

### Ausführungsform 6:

Rotorblatt (1) nach einer der vorstehenden Ausführungsformen,
dadurch gekennzeichnet, dass das Rotorblatt (1) bei der Rotorblattwurzel (4) eine Profiltiefe (3) von wenigstens 3900 mm, insbesondere in einem Bereich von 3000 mm bis 8000 mm, aufweist und/oder im Bereich von 90% bis 95% der Gesamtlänge, insbesondere bei 90%, ausgehend von der Rotorblattwurzel (4), eine Profiltiefe (3) von maximal 1000 mm, insbesondere in einem Bereich von 700 mm bis 300 mm, aufweist.

### Ausführungsform 7:

Rotorblatt (1) nach einer der vorstehenden Ausführungsformen,
dadurch gekennzeichnet, dass das Rotorblatt (1) im mittleren Bereich eine Profiltiefe aufweist, welche etwa 20% bis 30%, insbesondere etwa 25%, der Profiltiefe im Bereich der Rotorblattwurzel (4) entspricht

## Patentansprüche

1. Rotorblatt eines aerodynamischen Rotors einer Windenergieanlage umfassend:
- wenigstens einen ersten und einen zweiten Grenzschichtzaun (810, 820), wobei
- der erste Grenzschichtzaun (810) an dem Rotorblatt in radialer Richtung, bezogen auf eine Drehachse des Rotors, in einem Bereich von 25%- 40% des Radius des Rotors angeordnet ist und
- der zweite Grenzschichtzaun (820) an dem Rotorblatt in radialer Richtung, bezogen auf die Drehachse des Rotors, in einem Bereich von 45%- 60% des Radius des Rotors angeordnet ist,
wobei das Rotorblatt
- eine etwa in Bewegungsrichtung des Rotorblattes weisende Blattnase (803) und
- eine zur Blattnase (803) abgewandte Hinterkante (804) aufweist und
- jeder Grenzschichtzaun (810, 820) bzw. Zaunabschnitt (811, 812, 821, 822) von der Blattnase (803) zur Hinterkante (804) verlaufend in seiner Höhe (h) zunimmt, **dadurch gekennzeichnet, dass** der Grenzschichtzaun (810, 820) bzw. Zaunabschnitt (811, 812, 821, 822)
- in der Nähe der Blattnase (803) mit einer Höhe (h) von 0 bis 5 mm beginnt und bis zur Hinterkante (804) kontinuierlich bis zu einer Höhe (h) von über 15 mm, insbesondere über 20 mm ansteigt, und dadurch, dass
- der erste Grenzschichtzaun (810) eine größere mittlere Höhe (h) als der zweite Grenzschichtzaun (820) aufweist.

2. Rotorblatt nach Anspruch 1, **dadurch gekennzeichnet, dass**
- der erste Grenzschichtzaun (810) an dem Rotorblatt in radialer Richtung, bezogen auf die Drehachse des Rotors, in einem Bereich von 30%- 35% angeordnet ist und/oder
- der zweite Grenzschichtzaun (820) an dem Rotorblatt in radialer Richtung, bezogen auf die Drehachse des Rotors, in einem Bereich von 50%- 55% angeordnet ist.

3. Rotorblatt nach einem der vorstehenden Ansprüche, **dadurch gekennzeichnet, dass**
- der erste und der zweite Grenzschichtzaun (810, 820) jeweils an der Saugseite (801) des Rotorblattes angeordnet sind oder
- der erste und der zweite Grenzschichtzaun (810, 820) jeweils einen Zaunabschnitt (811, 812, 821, 822) an der Saugseite (801) und der Druckseite (802) des Rotorblattes aufweisen.

4. Rotorblatt nach einem der vorstehenden Ansprüche, **dadurch gekennzeichnet, dass**
- jeder Grenzschichtzaun (810, 820) bzw. Zaunabschnitt (811, 812, 821, 822) als Steg ausgebildet ist mit
- einem Basisabschnitt (B) und
- einem Rückenabschnitt (R), wobei,
- bezogen auf einen Profilschnitt des Rotorblattes an der Position des jeweiligen Grenzzaunes,
- der Basisabschnitt (B) dem Blattprofil folgt und
- der Rückenabschnitt (R) einer dem Blattprofil entsprechenden, aber gegenüber dem Blattprofil verschwenkten Konturlinie folgt, wobei
- die Konturlinie insbesondere um eine entlang der Blattnase (803) verlaufende Schwenkachse (806) um einen Auslegungswinkel verschwenkt ist.

5. Rotorblatt nach Anspruch 4, **dadurch gekennzeichnet, dass** der Auslegungswinkel im Bereich von 1-3° liegt.

6. Rotorblatt nach einem der vorstehenden Ansprüche, **dadurch gekennzeichnet, dass** der Grenzschichtzaun bei etwa eine Höhe (h) aufweist, die der Dicke einer Grenzschicht und/oder der 2fachen bis 5fachen Größe der Grenzverdrängung in dem Bereich entspricht.

7. Rotorblatt nach einem der vorstehenden Ansprüche, **dadurch gekennzeichnet, dass**
- die mittlere Höhe (h) des ersten Grenzschichtzauns wenigstens 30%, insbesondere wenigstens 50% höher als die mittlere Höhe (h) des zweiten Grenzschichtzauns ist.

8. Rotorblatt nach einem der vorstehenden Ansprüche, **dadurch gekennzeichnet, dass** auf der Saugseite (801) des Rotorblattes im vorderen Drittel zur Blattnase Wirbelgeneratoren zwischen dem ersten und zweiten Grenzschichtzaun (810, 820), insbesondere ausschließlich zwischen dem ersten und zweiten Grenzschichtzaun (810, 820) angeordnet sind.

9. Rotorblatt nach einem der vorstehenden Ansprüche, **dadurch gekennzeichnet, dass** das Rotorblatt für eine Schwachwindanlage ausgelegt ist und/oder seine größte Profiltiefe unmittelbar an seiner Blattwurzel zum Befestigen an einer Rotornabe des aerodynamischen Rotors aufweist.

10. Rotorblatt nach einem der vorstehenden Ansprüche, **dadurch gekennzeichnet, dass** seine relative Profiltiefe, bezogen auf die Drehachse des Rotors in radialer Richtung
- in einem Bereich von 30%- 50% einen Wert von 35% - 45% aufweist, insbesondere
- in einem Bereich von 35%- 45% einen Wert von 38% - 45% aufweist und/oder
- in einem Bereich von 40%- 55%, insbesondere 45% -50%, unter einen Wert von 38% abfällt.

11. Windenergieanalage, umfassend wenigstens ein, insbesondere drei Rotorblätter gemäß einem der vorstehenden Ansprüche.

## Claims

1. A rotor blade of an aerodynamic rotor of a wind turbine, comprising:
- at least a first and a second wing fence (810, 820), wherein
- the first wing fence (810) is arranged at the rotor blade in radial direction, in relation to an axis of rotation of the rotor, in a range of 25% to 40% of the radius of the rotor and
- the second wing fence (820) is arranged at the rotor blade in radial direction, in relation to the axis of rotation of the rotor, in a range of 45% to 60% of the radius of the rotor,
wherein
- has a blade nose (803) pointing approximately in the direction of movement of the rotor blade and
- a rear edge (804) facing away from the blade nose (803) and
- that each wing fence (810, 820) or fence section (811, 812, 821, 822), respectively, increases in terms of its height (h) starting from the blade nose (803) all the way to the rear edge (804), **characterized in that** the wing fence (810, 820) respectively fence section (811, 812, 821, 822),
- starts at a height (h) of 0 to 5 mm close to the blade nose (803) to then continuously increase up to a height (h) of more than 15 mm, in particular more than 20 mm, all the way to the rear edge (804), and that the
- the first wing fence (810) has a greater mean height (h) than the second wing fence (820).

2. A rotor blade according to Claim 1, **characterized in that**
- the first wing fence (810) is arranged at the rotor blade in radial direction, in relation to the axis of rotation of the rotor, in a range of 30% to 35% and/or
- the second wing fence (820) is arranged at the rotor blade in radial direction, in relation to the axis of rotation of the rotor, in a range of 50% to 55%.

3. A rotor blade according to one of the above claims, **characterized in that**
- the first and the second wing fence (810, 820) are arranged at the suction side (801) of the rotor blade or
- the first and the second wing fence (810, 820) each feature a fence section (811, 812, 821, 822) at the suction side (801) and at the pressure side (802) of the rotor blade.

4. A rotor blade according to one of the above claims, **characterized in that**
- each wing fence (810, 820) or fence section (811, 812, 821, 822), respectively, is designed as a bridge with
- a base section (B) and
- a rear section (R), wherein,
- in relation to a section of the rotor blade at the position of the respective boundary fence,
- the base section (B) follows the blade profile and
- the rear section (R) follows a contour line that corresponds to the blade profile but is pivoted compared to the blade profile, wherein
- the contour line is, in particular, pivoted by a design angle about a swivel axis (806) running along the blade nose (803).

5. A rotor blade according to Claim 4, **characterized in that** the design angle is in a range of 1 to 3°.

6. A rotor blade according to one of the above claims, **characterized in that** the wing fence has approximately a height (h) that equals the thickness of a boundary layer and/or 2 to 5 times the size of the boundary displacement **in that** area.

7. A rotor blade according to one of the above claims, **characterized in that**
- the mean height (h) of the first wing fence is at least 30%, in particular at least 50%, greater than the mean height (h) of the second wing fence.

8. A rotor blade according to one of the above claims, **characterized in that** vortex generators are arranged on the suction side (801) of the rotor blade in the first third towards the blade nose between the first and second wing fence (810, 820), in particular only between the first and second wing fence (810, 820).

9. A rotor blade according to one of the above claims, **characterized in that** the rotor blade is designed for a weak wind installation and/or has its greatest profile depth directly at its blade root for attaching to a rotor hub of the aerodynamic rotor.

10. A rotor blade according to one of the above claims, **characterized in that** its relative profile depth in radial direction, in relation to the axis of rotation of the rotor,
- has a value of 35% to 45% in an area of 30% to 50%, in particular
- a value of 38% to 45% in an area of 35% to 45% and/or
- drops below a value of 38% in an area of 40% to 55%, in particular 45% to 50%.

11. A wind turbine comprising at least one, in particular three, rotor blades according to one of the above claims.

## Revendications

1. Pale de rotor d'un rotor aérodynamique d'une éolienne comprenant :
- au moins une première et une seconde clôture de couche limite (810, 820), dans laquelle
-- la première clôture de couche limite (810) est disposée au niveau de la pale de rotor dans une direction radiale, par rapport à un axe de rotation du rotor, dans une plage de 25 % - 40 % du rayon du rotor, et
-- la seconde clôture de couche limite (820) est disposée au niveau de la pale de rotor dans une direction radiale, par rapport à l'axe de rotation du rotor, dans une plage de 45 % - 60 % du rayon du rotor,
dans laquelle la pale de rotor présente
- un bord d'attaque (803) pointant à peu près dans le sens de déplacement de la pale de rotor et
- un bord de fuite (804) opposé au bord d'attaque (803), et
- chaque clôture de couche limite (810, 820) ou chaque section de clôture (811, 812, 821, 822) s'étendant depuis le bord d'attaque (803) vers le bord de fuite (804) augmente dans sa hauteur (h), **caractérisée en ce que** la clôture de couche limite (810, 820) ou la section de clôture (811, 812, 821, 822)
- commence à proximité du bord d'attaque (803) avec une hauteur (h) de 0 à 5 mm et augmente jusqu'au bord de fuite (804) en continu jusqu'à une hauteur (h) supérieure à 15 mm, en particulier supérieure à 20 mm, et **en ce que**
- la première clôture de couche limite (810) présente une hauteur (h) moyenne plus grande que la seconde clôture de couche limite (820).

2. Pale de rotor selon la revendication 1, **caractérisée en ce que**
- la première clôture de couche limite (810) est disposée au niveau de la pale de rotor dans une direction radiale, par rapport à l'axe de rotation du rotor, dans une plage de 30 % - 35 %, et/ou
- la seconde clôture de couche limite (820) est disposée au niveau de la pale de rotor dans une direction radiale, par rapport à l'axe de rotation du rotor, dans une plage de 50 % - 55 %.

3. Pale de rotor selon l'une quelconque des revendications précédentes, **caractérisée en ce que**
- la première et la seconde clôture de couche limite (810, 820) sont disposées respectivement au niveau du côté aspiration (801) de la pale de rotor, ou
- la première et la seconde clôture de couche limite (810, 820) présentent respectivement une section de clôture (811, 812, 821, 822) au niveau du côté aspiration (801) et du côté pression (802) de la pale de rotor.

4. Pale de rotor selon l'une quelconque des revendications précédentes, **caractérisée en ce que**
- chaque clôture de couche limite (810, 820) ou chaque section de clôture (811, 812, 821, 822) est réalisée sous la forme d'une entretoise avec
- une section de base (B) et
- une section arrière (R), dans laquelle
- par rapport à une coupe profilée de la pale de rotor au niveau de la position de la clôture limite respective
- la section de base (B) suit le profilé de pale et
- la section arrière (R) suit une ligne de contour correspondant au profilé de pale, pouvant pivoter toutefois par rapport au profilé de pale, dans laquelle
- la ligne de contour est pivotée d'un angle de configuration en particulier autour d'un axe de pivotement (806) s'étendant le long du bord d'attaque (803) .

5. Pale de rotor selon la revendication 4, **caractérisée en ce que** l'angle de configuration se situe dans la plage de 1 - 3°.

6. Pale de rotor selon l'une quelconque des revendications précédentes, **caractérisée en ce que** la clôture de couche limite présente à peu près une hauteur (h), qui correspond à l'épaisseur de la couche limite et/ou à 2 fois à 5 fois la dimension du refoulement limite dans la zone.

7. Pale de rotor selon l'une quelconque des revendications précédentes, **caractérisée en ce que**
- la hauteur (h) moyenne de la première clôture de couche limite est d'au moins 30 %, en particulier d'au moins 50 %, plus élevée que la hauteur (h) moyenne de la seconde clôture de couche limite.

8. Pale de rotor selon l'une quelconque des revendications précédentes, **caractérisée en ce que** sont disposés, sur le côté aspiration (801) de la pale de rotor, dans le tiers avant par rapport au bord d'attaque, des générateurs de tourbillons entre la première et la seconde clôture de couche limite (810, 820), en particulier exclusivement entre la première et la seconde clôture de couche limite (810, 820).

9. Pale de rotor selon l'une quelconque des revendications précédentes, **caractérisée en ce que** la pale de rotor est configurée pour une installation pour vents faibles et/ou présente sa plus grande profondeur de profilé directement au niveau de son pied de pale aux fins de la fixation au niveau d'un moyeu de rotor du rotor aérodynamique.

10. Pale de rotor selon l'une quelconque des revendications précédentes, **caractérisée en ce que** sa profondeur de profilé relative, par rapport à l'axe de rotation du rotor dans une direction radiale
- présente, dans une plage de 30 % - 50 %, une valeur de 35 % - 45 %, en particulier
- présente, dans une plage de 35 % - 45 %, une valeur de 38 % - 45 %, et/ou
- chute, dans une plage de 40 % - 55 %, en particulier 45 % - 50 %, sous une valeur de 38 %.

11. Eolienne comprenant au moins une, en particulier trois, pales de rotor selon l'une quelconque des revendications précédentes.
